# EUROPÄISCHE PATENTANMELDUNG

(11) **EP 2 050 993 A1**
(43) Veröffentlichungstag der Anmeldung: **22.04.2009**
(21) Anmeldenummer: 08017703.3
(22) Anmeldetag: 09.10.2008
(51) Int. Cl.: F16L 11/15, F16L 27/111, F16L 33/26

(54) **Zusammengesetzte Schlauchanordnung und Verfahren zum Herstellen einer solchen**

(30) Priorität: 18.10.2007 DE 102007049852
(71) Anmelder: Witzenmann GmbH, 75175 Pforzheim (DE)
(72) Erfinder: Bantscheff, Richard, 75233 Tiefenbronn (DE); Bessler, Frank, 75446 Wiernsheim (DE); Mauch, Stefan, 75305 Neuenbürg (DE); Schiffner, Andreas, 75417 Mühlacker (DE)
(74) Vertreter: Lemcke, Brommer & Partner

(57) **Zusammenfassung**

Eine zusammengesetzte Schlauchanordnung (5) aus einer Innenschlauchanordnung (6), wie einem metallischen Ringwellschlauch (7) mit wenigstens einem endständigen Anschlussteil (9, 10) und mit einer Polymerummantelung (8), und einem die Innenschlauchanordnung (6) umgebenden metallischen Geflechtschlauch (1) zeichnet sich dadurch aus, dass die Innenschlauchanordnung (6) und der Geflechtschlauch (1) separat hergestellt werden, dass anschließend der Geflechtschlauch (1) auf eine zum Umgeben der Innenschlauchanordnung (6) gewünschte Länge (L) abgelängt und an wenigstens einem seiner Enden mit einer außen liegenden Endhülse (2, 3) stoffschlüssig verbunden wird und dass dann der Geflechtschlauch (1) auf die Innenschlauchanordnung (6) aufgebracht und im Bereich der Endhülse (2, 3) stoffschlüssig und/oder kraft- und/oder formschlüssig an dem Anschlussteil (9, 10) festgelegt wird.

## Beschreibung

Die Erfindung betrifft ein Verfahren nach dem Oberbegriff des Patentanspruchs 1 zum Herstellen einer zusammengesetzten Schlauchanordnung aus einer Innenschlauchanordnung, wie einem metallischen Ringwellschlauch mit wenigstens einem endständigen Anschlussteil und mit einer Polymerummantelung, und einem die Innenschlauchanordnung umgebenden metallischen Geflechtschlauch.

Weiterhin betrifft die Erfindung eine zusammengesetzte Schlauchanordnung nach dem Oberbegriff des Patentanspruchs 6 aus einer Innenschlauchanordnung, wie einem metallischen Ringwellschlauch mit wenigstens einem endständigen Anschlussteil und mit einer Polymerummantelung, und einem die Innenschlauchanordnung umgebenden metallischen Geflechtschlauch.

Derartige zusammengesetzte Schlauchanordnungen und Verfahren zu ihrer Herstellung sind bekannt und werden insbesondere als so genannte Klimaschläuche in Klimaanlagen, insbesondere für Kfz-Anwendungen, eingesetzt. Sie zeichnen sich aufgrund ihres Aufbaus vor allem durch hohe Gasdichtigkeit insbesondere gegenüber einem Austreten von Kohlendioxid (CO₂) aus, wobei diese Problematik heutzutage eine immer stärker ausgeprägte Aufmerksamkeit erfährt.

Aus dem Stand der Technik ist in diesem Zusammenhang bekannt, die Innenschlauchanordnung aus einem metallischen Ringwellschlauch oder Balg, der wenigstens ein endständiges Anschlussteil und eine Polymerummantelung aufweist, direkt in eine Flechtmaschine einzuführen und zur Herstellung des sie umgebenden Geflechtsschlauchs zu umflechten. Anschließend wird das Geflecht zwischen einzelnen Innenschlauchanordnungen mit Grobschnitt getrennt. Dann werden Endhülsen auf den Geflechtsstrumpf aufgefädelt, was herkömmlicherweise mit großem manuellen Arbeitsaufwand geschieht, da das Geflecht durch den Grobschnitt aufgesprungen ist. Eine exakte Montage und Positionierung der Endhülsen ist dabei nicht als automatisierbarer Prozess durchführbar, da Anschlussteile der Innenschlauchanordnung durch den überstehenden Geflechtstrumpf verdeckt sind. Die Endhülsen werden anschließend in einem weiteren manuellen Verfahrensschritt verpresst, und der Geflechtsüberstand wird abgeschnitten, wobei es zu Beschädigungen der Anschlussteile kommen kann. Schließlich erfolgt die Geflechtsanbindung durch Schweißen, wobei die Endhülsen und das Geflecht mit den Anschlussteilen verschweißt werden. Hierbei kann sich insbesondere Schmutz am Geflecht negativ auf die Qualität der Schweißanbindung auswirken. Um weiterhin eine Verschmutzung der Innenschlauchanordnung in der Flechtmaschine zu vermeiden, ist zusätzlich das Anbringen von Verschlussmittein (Stopfen) an den Anschlussteilen der Innenschlauchanordnung notwendig. Darüber hinaus kann es beim Abziehen von der Flechtmaschine zu Verformungen der Innenschlauchanordnung kommen. Auch beim Geflechtsgrobschnitt sind Verschlussmittel an den Anschlussteilen der Innenschlauchanordnung notwendig, damit kein Schmutz in die Innenschlauchanordnung gelangt. Zudem entstehen Verschnittverluste an dem Geflechtmaterial.

Demgegenüber liegt der Erfindung die Aufgabe zugrunde, ein Verfahren und eine zusammengesetzte Schlauchanordnung der jeweils eingangs genannten Art dahingehend weiterzuentwickeln, dass die Herstellung derartiger zusammengesetzter Schlauchanordnungen mit verringertem Aufwand, verringerten Materialverlusten, höherer Präzision und entsprechend geringeren Kosten ermöglicht wird.

Die Erfindung löst diese Aufgabe mittels eines Verfahrens mit den Merkmalen des Patentanspruchs 1 sowie mittels einer zusammengesetzten Schlauchanordnungen mit den Merkmalen des Patentanspruchs 6.

Vorteilhafte Weiterbildungen des erfindungsgemäßen Verfahrens bzw. der erfindungsgemäßen zusammengesetzten Schlauchanordnung sind jeweils Gegenstand von Unteransprüchen, deren Wortlaut durch Bezugnahme in die Beschreibung aufgenommen wird, um unnötige Textwiederholungen zu vermeiden.

Erfindungsgemäß ist ein Verfahren zum Herstellen einer zusammengesetzten Schlauchanordnung aus einer Innenschlauchanordnung, wie einem metallischen Ringwellschlauch mit wenigstens einem endständigen Anschlussteil und mit einer Polymerummantelung, und einem die Innenschlauchanordnung umgebenden metallischen Geflechtschlauch dadurch gekennzeichnet, dass die Innenschlauchanordnung und der Geflechtschlauch separat hergestellt werden, dass anschließend der Geflechtschlauch auf eine zum Umgeben der Innenschlauchanordnung gewünschte Länge abgelängt und an wenigstens einem seiner Enden mit einer außen liegenden Endhülse stoffschlüssig verbunden wird und dass dann der Geflechtschlauch auf die Innenschlauchanordnung aufgebracht und im Bereich der Endhülse stoffschlüssig und/oder kraft- und/oder formschlüssig an dem Anschlussteil festgelegt wird.

Weiterhin ist erfindungsgemäß eine zusammengesetzte Schlauchanordnung aus einer Innenschlauchanordnung, wie einem metallischen Ringwellschlauch mit wenigstens einem endständigen Anschlussteil und mit einer Polymerummantelung, und einem die Innenschlauchanordnung umgebenden metallischen Geflechtschlauch dadurch gekennzeichnet, dass der Geflechtschlauch an wenigstens einem seiner Enden mit einer außen liegenden Endhülse stoffschlüssig verbunden ist und dass der Geflechtschlauch auf die Innenschlauchanordnung aufgebracht und im Bereich der Endhülse kraft- und/oder formschlüssig und/oder stoffschlüssig an dem Anschlussteil festgelegt ist.

Nach einem Grundgedanken der vorliegenden Erfindung werden demnach die Innenschlauchanordnung und der Geflechtsschlauch separat hergestellt, so dass es nicht zu einer Verschmutzung der Innenschlauchanordnung durch den Einsatz von Flechtmaschinen kommt. Entsprechend ist auch kein Verschließen der Innenschlauchanordnung notwendig, und es kann nicht zu einer Verformung der Innenschlauchanordnung im Bereich der Flechtmaschine kommen.

Dies ist mit einer entsprechenden Arbeits- und Kostenersparnis verbunden. Zudem können die separat hergestellten Geflechtsschläuche nach ihrer Herstellung gereinigt werden und stehen so für die weiteren Prozessschritte in gesäuberter Form zur Verfügung.

Um die Innenschlauchanordnung anschließend mit Geflecht zu umgeben, kann dieses nach Art einer Schlauchmeterware genau auf eine gewünschte Länge entsprechend der zu umgebenden Innenschlauchanordnung abgelängt werden, so dass keine losbezogene Fertigung des Geflechts erforderlich ist, wodurch sich erheblich geringere Rüstkosten ergeben.

Erfindungsgemäß wird der abgelängte Geflechtsschlauch anschließend an wenigstens einem seiner Enden mit einer außenliegenden Endhülse stoffschlüssig verbunden, vorzugsweise durch Widerstandsschweißen verschweißt. Alternativ können der Geflechtsschlauch und die Endhülse(n) auch durch Rollnahtschweißen, Mikroplasmaschweißen, Laserschweißen, WIG-Stirnnahtschweißen, Löten oder Kleben verbunden werden. Vorzugsweise wird dabei die Ablängung des Geflechtsschlauchs bei fixiertem Geflecht durchgeführt, und die Enden werden in demselben Prozess mit den Endhülsen verbunden, so dass es zu keinem Aufspringen des Geflechts kommt.

Bei einer Ausgestaltung der vorliegenden Erfindung ist vorgesehen, dass die Endhülsen den Geflechtsschlauch endseitig um ein gewisses Maß überragen, so dass an den Endhülsen kein aufgefächertes Geflechtsende entsteht, das sich nachteilig auf nachfolgende Fertigungsschritte auswirken könnte.

Dann wird bei einer Ausgestaltung des erfindungsgemäßen Verfahrens der Geflechtsschlauch oder Geflechtsabschnitt mit den angebundenen Endhülsen auf der Innenschlauchanordnung montiert, wozu die Innenschlauchanordnung und der Geflechtsabschnitt in eine entsprechende Fügestation aufgenommen werden und anschließend der Geflechtsabschnitt auf die Innenschlauchanordnung geschoben wird. Dann wird der Geflechtsschlauch über wenigstens eine Endhülse durch Stoff-, Form- oder Kraftschluss an der Innenschlauchanordnung, das heißt an deren wenigstens einem Anschlussteil fixiert.

Vorteilhafterweise weist der Geflechtsschlauch an seinen beiden Enden eine entsprechende Endhülse und die Innenschlauchanordnung an ihren beiden Enden ein entsprechendes Anschlussteil auf.

Die Herstellung der Innenschlauchanordnung ist an sich nicht Gegenstand der vorliegenden Erfindung. Ein bevorzugtes Verfahren ist in der parallelen Patentanmeldung der Anmelderin mit dem anwaltlichen Aktenzeichen 21 422 offenbart, auf die insoweit ausdrücklich Bezug genommen wird. Demgemäß umfasst die Innenschlauchanordnung eine Anschlussverbindung für Schlauchleitungen mit einem zumindest abschnittsweise konischen Anschlussteil, insbesondere Anschlussrohr, bei der ein axiales Ende der Schlauchleitung stoffschlüssig an dem Anschlussteil festgelegt ist, die sich dadurch auszeichnet, dass das Schlauchleitungsende in seinem endständigen Bereich konisch aufgeweitet ist, dass das Anschlussteil mit seinem konischen Abschnitt in den konisch aufgeweiteten Bereich der Schlauchleitung eingesteckt ist und dass in einem Überlappungsbereich von Schlauchleitung und Anschlussteil die Schlauchleitung flächig an dem Anschlussteil festgelegt ist.

Erfindungsgemäß ist nunmehr eine exakte Positionierung der Endhülse(n) möglich, was zu kleineren Toleranzen der Nennlänge der zusammengesetzten Schlauchanordnung führt. Da der Feinschnitt des aufgezogenen Geflechtsschlauchs entfällt, ist außerdem keine Beschädigung der Anschlussteile zu erwarten. Weiterhin lässt sich im Zuge des erfindungsgemäßen Verfahrens der Ringwellschlauch relativ zum Geflecht vorspannen. Dazu ist eine Längendifferenz von Ringwellschlauch und Geflechtsschlauch erforderlich, die im Rahmen der vorliegenden Erfindung insbesondere zwischen 1 mm und 25 mm, vorzugsweise 5 mm betragen kann.

Zusätzliche Vorteile können sich ergeben, wenn aufgrund einer kraft- und/oder formschlüssigen Fixierung der Endhülse keine Schweißanbindung des Geflechts an der Innenschlauchanordnung nötig ist. Dies bedingt insbesondere einen Kostenvorteil durch geringere Taktzeit beim Endhülsenverpressen, da kein Erzeugen eines definierten Schweißspalts notwendig ist. Da auch das Vorhalten einer entsprechenden Schweißvorrichtung, insbesondere einer Laserschweißvorrichtung entfällt, ist insbesondere in Bezug auf diesen Fertigungsschritt eine erhebliche erfindungsgemäße Reduzierung der Investitions- bzw. Herstellungskosten zu erwarten. Da zudem erfindungsgemäß keine Gefügeänderung an den Bauteilen auftritt, erübrigt sich eine abschließende Helium (He)-Dichtigkeitsprüfung.

Mögliche alternative Arten der Geflechtsanbindung an der Innenschlauchanordnung umfassen Rollieren, Rundkneten und magnetisches Umformen sowie Schrumpfen, Kleben, Rollnaht-, WIG-Stirnnaht- und Laserschweißen.

Weitere Eigenschaften und Vorteile der vorliegenden Erfindung ergeben sich aus der nachfolgenden Beschreibung von Ausführungsbeispielen anhand der Zeichnung. Es zeigt:
- Figur 1: eine teilweise Querschnittsansicht eines metallischen Geflechtsschlauchs mit endständigen Endhülsen zur Verwendung in einer erfindungsgemäßen zusammengesetzten Schlauchanordnung;
- Figur 2: eine vergrößerte Detailansicht eines Endes des Geflechtsschlauchs gemäß Figur 1;
- Figur 3: eine Ausgestaltung der erfindungsgemäßen zusammengesetzten Schlauchanordnung, teilweise im Querschnitt; und
- Figur 4: ein Ablaufdiagramm einer Ausgestaltung des erfindungsgemäßen Verfahrens.

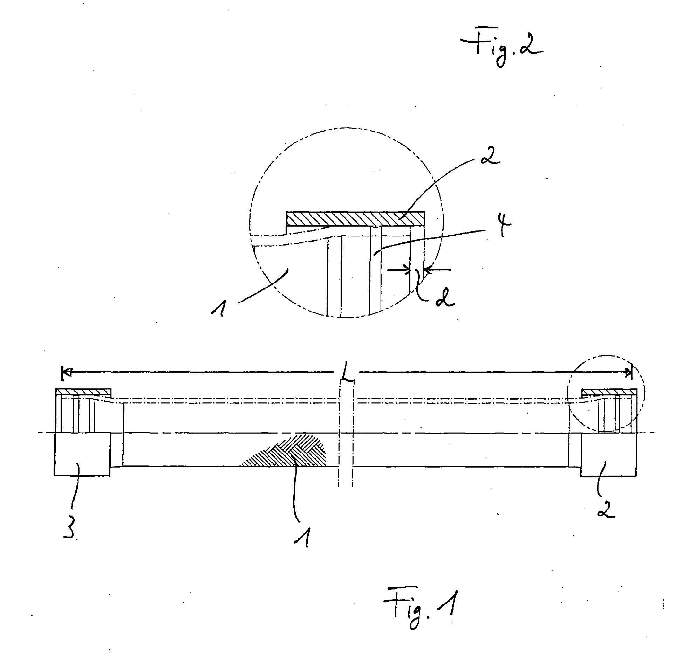

Figur 1 zeigt teilweise im Querschnitt einen Geflechtsschlauch 1 mit einer Länge L, der an seinen beiden Enden jeweils eine Endhülse 2, 3 in Form eines Kreiszylinderabschnitts aufweist.

Figur 2 zeigt einen vergrößerten Ausschnitt des metallischen Geflechtsschlauchs 1 im Bereich der rechten Endhülse 2 in Figur 1. Wie der Abbildung in Figur 2 zu entnehmen ist, weist die Endhülse 2 (ebenso wie Endhülse 3 in Figur 1) endseitig gegenüber dem Geflechtsschlauch 1 ein gewisses Übermaß d auf. Wie ebenfalls insbesondere der Abbildung in Figur 2 zu entnehmen ist, ist der metallische Geflechtsschlauch 1 im Bereich einer Schweißnaht 4 innen an der Endhülse 2 (und entsprechend an der Endhülse 3 in Figur 1) stoffschlüssig festgelegt.

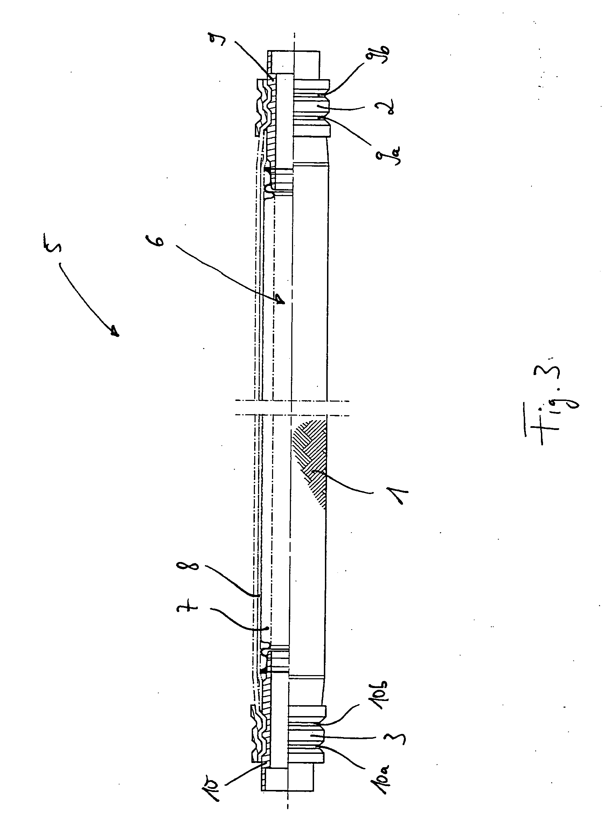

Der vorstehend anhand der Figuren 1 und 2 beschriebene Geflechtsschlauch 1 mitsamt den Endhülsen 2 und 3 lässt sich insbesondere zum Herstellen einer erfindungsgemäßen zusammengesetzten Schlauchanordnung verwenden, die weiter unten anhand der Figur 3 detailliert beschrieben wird. Dazu wird der metallische Geflechtsschlauch 1 zunächst separat hergestellt und kann anschließend zu Lagerungs- und/oder Transportzwecken auf einer eine Trommel oder dergleichen aufgehaspelt werden. Der metallische Geflechtsschlauch 1 steht so für die Herstellung der noch zu beschreibenden zusammengesetzten Schlauchanordnung als Meter- oder so genannte Coilware zur Verfügung und kann entsprechend auf eine gewünschte Länge L (vgl. Figur 1) abgelängt werden.

Optional kann zwischen Flechten und Aufhaspeln des Geflechtsschlauches noch eine Reinigung desselben erfolgen, da bei Flechtmaschinen, die herkömmlicherweise zum Herstellen des Geflechtsschlauches 1 verwendet werden, eine Ölverschmutzung des Geflechtsschlauches 1 auftreten kann, die bei bestimmten Verwendungen desselben, beispielsweise für Klimaschläuche, unerwünscht ist. Anschließend wird das Geflecht auf eine gewünschte Länge L abgelängt. Dann werden die Endhülsen 2, 3 aufgebracht und mit dem Geflecht verbunden, insbesondere durch Widerstandsschweißen.

Der Geflechtsschlauch 1 liegt nunmehr in der in Figur 1 gezeigten Form vor und kann zur Herstellung einer zusammengesetzten Schlauchanordnung gemäß Figur 3 verwendet werden.

Figur 3 zeigt eine erfindungsgemäße Ausgestaltung einer zusammengesetzten Schlauchanordnung 5, die einen metallischen Geflechtsschlauch 1 mit endständigen Endhülsen 2, 3 gemäß den Figuren 1 und 2 aufweist. Der Geflechtsschlauch 1 umgibt eine Innenschlauchanordnung 6, die aus einem ringgewellten Metallschlauch oder Balg 7, einer Polymerummantelung 8, die den Ringwellschlauch 7 umgibt, und endständigen Anschlussteilen 9, 10 gebildet ist, die an den Enden des Ringwellschlauchs 7 in diesen eingesteckt und dort mit dem Ringwellschlauch 7 verschweißt sind. Die Polymerummantelung 8 kann aus Silikon oder einem anderen geeigneten Polymer bestehen. Sie kann in Form einer Umspritzung oder in Form eines Überzugs aus entsprechender Schlauchmeterware bestehen, der entsprechend abgelängt und über den Balg 7 gezogen wird.

Die Polymerummantelung 8 umgibt den gesamten Ringwellschlauch 7 mitsamt der Anschlussbereiche von Ringwellschlauch 8 und den Anschlussteilen 9, 10, wie in Figur 3 gezeigt.

Der vorstehend anhand der Figuren 1 und 2 detailliert beschriebene Geflechtsschlauch 1 mit Endhülsen 2, 3 ist auf die Innenschlauchanordnung 6 aufgebracht, so dass der Geflechtsschlauch 1 den Ringwellschlauch 7 und die Polymerummantelung 8 vollständig umgibt. Dabei sind die Endhülsen 2, 3 im Bereich der Anschlussteile 9 bzw. 10 angeordnet. Mit ihrem jeweils inneren, das heißt dem Ringwellschlauch 7 zugewandten Rand können die Endhülsen 2, 3 unter Umständen jeweils ein Ende der Polymerummantelung 8 übergreifen, was jedoch insbesondere aus Dichtigkeitsgründen vermieden werden sollte. Die Endhülsen 2, 3 und damit der Geflechtsschlauch 1 sind kraft- und formschlüssig an dem jeweiligen Anschlussteil 9 bzw. 10 festgelegt. Gemäß der gezeigten Ausgestaltung weisen die Anschlussteile 9, 10 an ihrer äußeren Mantelfläche eine Struktur aus jeweils zwei zueinander parallel und in Umfangsrichtung verlaufenden Vertiefungen 9a, b bzw. 10a, b mit in etwa wannenförmigem Querschnitt auf. In diese Vertiefungen 9a, b, 10a, b werden der Geflechtsschlauch 1 und die Endhülsen 2 bzw. 3 eingepresst, so dass eine erfindungsgemäße zusammengesetzte Schlauchanordnung 5 gebildet ist.

Ein zusätzliches Verschweißen der Endhülsen 2, 3 und des Geflechtsschlauchs 1 mit den Anschlussteilen 9, 10 ist anders als bei herkömmlichen zusammengesetzten Schlauchanordnungen bei dem gezeigten Ausführungsbeispiel nicht erforderlich. Obwohl dies in der Darstellung gemäß Figur 3 nicht zu erkennen ist, kann weiterhin vor dem Verbinden der Endhülsen 2,3 und des Geflechtsschlauchs 1 mit den Anschlussteilen 9, 10 eine definierte Geflechtsanlage an der Innenschlauchanordnung 6 erzeugt werden. Weiterhin lässt sich die Lebensdauer der gezeigten zusammengesetzten Schlauchanordnung 5 dadurch erhöhen, dass der Ringwellschlauch 7 vor dem Verpressen der Endhülsen 2, 3 relativ zum Geflechtschlauch 1 vorgespannt wird.

Die erfindungsgemäße zusammengesetzte Schlauchanordnung 5 gemäß Figur 3 eignet sich in besonderer Weise als CO₂-dichte Schlauchanordnung für eine Verwendung in Klimaanlagen, das heißt als Klimaschlauch, insbesondere für Kfz-Anwendungen, ist jedoch nicht hierauf beschränkt.

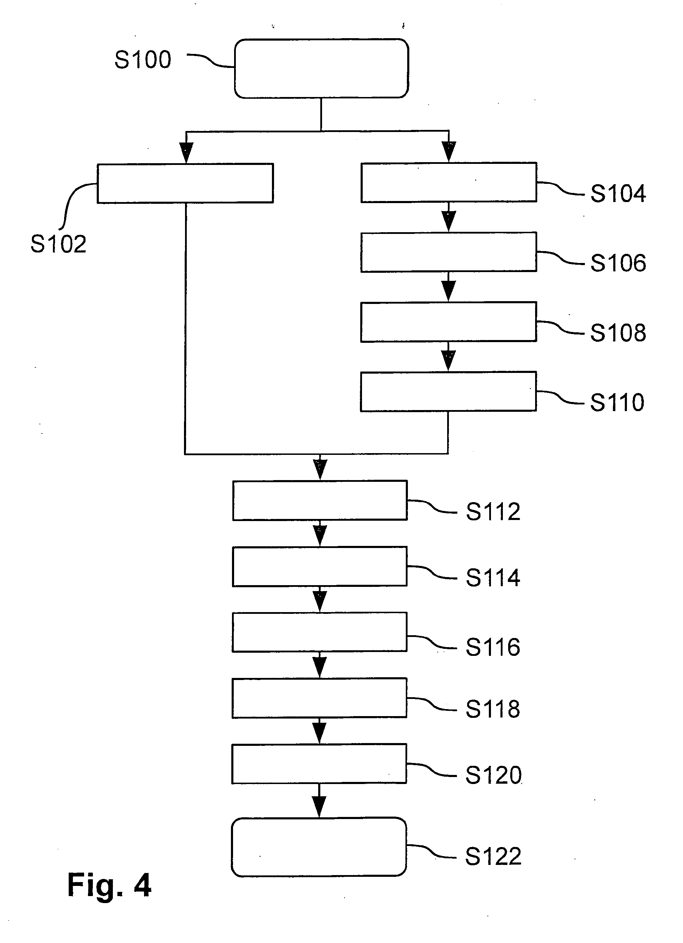

Figur 4 ist ein Ablaufdiagramm einer Ausgestaltung des erfindungsgemäßen Verfahrens zum Herstellen einer zusammengesetzten Schlauchanordnung, insbesondere der zusammengesetzten Schlauchanordnung 5 gemäß Figur 3.

Das Verfahren beginnt mit Schritt S100. Anschließend erfolgen in Schritten S102 und S104 unabhängig voneinander und insbesondere zeitgleich das Herstellen der weiter oben anhand der Figur 3 detailliert beschriebenen Innenschlauchanordnung (Schritt S102) aus einem metallischen Ringwellschlauch mit mindestens einem endständigen Anschlussteil und mit einer Polymerummantelung, was an sich nicht Gegenstand der vorliegenden Anmeldung ist, sowie das Herstellen des Geflechtsschlauchs mit wenigstens einer endständigen Endhülse (Schritt S104; vgl. Figuren 1 und 2). An den Schritt S104 schließen sich - weiterhin parallel zum Herstellen der Innenschlauchanordnung in Schritt S102 - weitere Verfahrensschritte an: In Schritt S106 wird der hergestellte Geflechtsschlauch von Öl und anderen Verschmutzungen gereinigt. An dieser Stelle sei darauf hingewiesen, dass erfindungsgemäß kein aufwändiges Verschließen (Verstopfen oder dergleichen) der Innenschlauchanordnung nötig ist, um diese vor Verschmutzungen zu schützen, da die Innenschlauchanordnung anders als bei herkömmlichen Verfahren zum Herstellen einer zusammengesetzten Schlauchanordnung nicht durch eine Flechtmaschine mit öliger Umgebung läuft.

Anschließend wird das Geflecht in Schritt S108 auf die zur Herstellung der zusammengesetzten Schlauchanordnung benötigte Länge (vgl. L in Figur 1) abgelängt. Anschließend werden in Schritt S110 die Endhülsen auf den Geflechtsschlauch aufgebracht und mit diesem durch Verschweißen, vorzugsweise durch Widerstandsschweißen, oder anderweitig verbunden.

Vor dem anschließenden Verfahrensschritt S112 vereinigen sich die parallelen Verfahrensstränge S102 bzw. S104-S110, so dass im Schritt S112 der separat hergestellte Geflechtsschlauch mit den angeschweißten Endhülsen auf die Innenschlauchanordnung aufgebracht werden kann. Dann erfolgt in Schritt S114 eine exakte Positionierung der Endhülsen mit nur kleinen Toleranzen der Länge der gesamten zusammengesetzten Schlauchanordnung. In Schritt S116 erfolgt dann gegebenenfalls das bereits genannte Vorspannen des Ringwellschlauchs zum Geflecht. Weiterhin kann in einem anschließenden Schritt S118 eine definierte Geflechtsanlage an der Innenschlauchanordnung erzeugt werden. Abschließend wird in Schritt S120 der Geflechtsschlauch auf der Innenschlauchanordnung fixiert, und das Verfahren endet mit Schritt S122.

Wie der Fachmann erkennt, erfolgt das Anlegen in Schritt S118 und das Verbinden in Schritt S120 zweckmäßigerweise dergestalt, dass zunächst eine Endhülse mit einem entsprechenden Anschlussteil der Innenschlauchanordnung verbunden wird, dass anschließend das Geflecht auf der Innenschlauchanordnung angelegt wird und dass dann die zweite Endhülse mit dem entsprechenden zweiten Anschlussteil der Innenschlauchanordnung verbunden wird.

## Patentansprüche

1. Verfahren zum Herstellen einer zusammengesetzten Schlauchanordnung (5) aus einer Innenschlauchanordnung (6), wie einem metallischen Ringwellschlauch (7) mit wenigstens einem endständigen Anschlussteil (9, 10) und mit einer Polymerummantelung (8), und einem die Innenschlauchanordnung (6) umgebenden metallischen Geflechtschlauch (1), **dadurch gekennzeichnet, dass** die Innenschlauchanordnung (6) und der Geflechtschlauch (1) separat hergestellt werden, dass anschließend der Geflechtschlauch (1) auf eine zum Umgeben der Innenschlauchanordnung (6) gewünschte Länge (L) abgelängt und an wenigstens einem seiner Enden mit einer außen liegenden Endhülse (2, 3) stoffschlüssig verbunden wird und dass dann der Geflechtschlauch (1) auf die Innenschlauchanordnung (6) aufgebracht und im Bereich der Endhülse (2, 3) stoffschlüssig und/oder kraft- und/oder formschlüssig an dem Anschlussteil (9, 10) festgelegt wird.

2. Verfahren nach Anspruch 1, **dadurch gekennzeichnet, dass** der Geflechtschlauch (1) insbesondere unmittelbar nach dem Flechten und vor dem Verbinden mit der Endhülse (2, 3) gereinigt wird.

3. Verfahren nach Anspruch 1 oder 2, **dadurch gekennzeichnet, dass** die Endhülse (2, 3) mit einem gewissen endseitigen Überstand (d) mit dem Geflechtschlauch (1) verbunden wird.

4. Verfahren nach einem der vorhergehenden Ansprüche, **dadurch gekennzeichnet, dass** die Innenschlauchanordnung (6) vor dem Festlegen des Geflechtsschlauchs (1) vorgespannt wird.

5. Verfahren nach einem der vorhergehenden Ansprüche, **dadurch gekennzeichnet, dass** vor dem Festlegen des Geflechtsschlauchs (1) eine definierte Geflechtsanlage an der Innenschlauchanordnung (6) erzeugt wird.

6. Zusammengesetzte Schlauchanordnung (5) aus einer Innenschlauchanordnung (6), wie einem metallischen Ringwellschlauch (7) mit wenigstens einem endständigen Anschlussteil (9, 10) und mit einer Polymerummantelung (8), und einem die Innenschlauchanordnung (6) umgebenden metallischen Geflechtschlauch (1), **dadurch gekennzeichnet, dass** der Geflechtschlauch (1) an wenigstens einem seiner Enden mit einer außen liegenden Endhülse (2, 3) stoffschlüssig verbunden ist und dass der Geflechtschlauch (1) auf die Innenschlauchanordnung (6) aufgebracht und im Bereich der Endhülse (2, 3) kraft- und/oder formschlüssig und/oder stoffschlüssig an dem Anschlussteil (9, 10) festgelegt ist.

7. Zusammengesetzte Schlauchanordnung (5) nach Anspruch 6, **dadurch gekennzeichnet, dass** die Endhülse (2, 3) mit dem Geflechtschlauch (1) verschweißt, verlötet oder verklebt ist.

8. Zusammengesetzte Schlauchanordnung (5) nach Anspruch 6 oder 7, **dadurch gekennzeichnet, dass** die Endhülse (2, 3) endseitig einen gewissen Überstand (d) gegenüber dem Geflechtschlauch (1) aufweist.

9. Zusammengesetzte Schlauchanordnung (5) nach einem der Ansprüche 6 bis 8, **dadurch gekennzeichnet, dass** die Innenschlauchanordnung (6) an dem Anschlussteil (9, 10) eine von außen zugängliche Struktur (9a, b; 10a, b) aus Vertiefungen und/oder Erhöhungen aufweist, an welcher der Geflechtschlauch (1) im Bereich der Endhülse (2, 3) stoff- und/oder kraft- und/oder formschlüssig festgelegt ist.

10. Zusammengesetzte Schlauchanordnung nach einem der Ansprüche 6 bis 9, **dadurch gekennzeichnet, dass** der Geflechtsschlauch (1) gegenüber der Innenschlauchanordnung (6) vorgespannt ist.
